# EUROPÄISCHE PATENTSCHRIFT

(11) **EP 0 657 626 B1**
(45) Veröffentlichungstag und Bekanntmachung des Hinweises auf die Patenterteilung: **16.07.1997**
(21) Anmeldenummer: 94119097.7
(22) Anmeldetag: 03.12.1994
(51) Int. Cl.: F01K 23/10, F22D 11/02

(54) **Anordnung für die Speisewassereinspeisung in einem Kombikraftwerk**
Feedwater supply arrangement in a combined cycle power plant
Installation pour l'alimentation de l'eau dans une centrale combinée

(30) Priorität: 09.12.1993 DE 4342003
(43) Veröffentlichungstag der Anmeldung: 14.06.1995
(73) Patentinhaber: ABB PATENT GmbH, D-68309 Mannheim (DE)
(72) Erfinder: Rachid, Nabil, D-68526 Ladenburg (DE)
(74) Vertreter: Rupprecht, Klaus, Dipl.-Ing.

(56) Entgegenhaltungen:
- EP-A- 0 523 467
- US-A- 5 215 448

## Beschreibung

Die Erfindung betrifft eine Anordnung für die Speisewassereinspeisung in einem Dampferzeuger, vorzugsweise in einem Abhitzekessel eines Kombikraftwerks mit wenigstens einem Abhitzekessel, der mit einem Hochdruck-Drucksystem und mit einem Niederdruck-Drucksystem ausgestattet ist, die jeweils aus wenigstens einem Speisewasserbehälter speisbar sind und deren Speisewasserpumpenstrecke jeweils dreifach redundant ausgeführt sind, welche Speisewasserpumpenstränge Pumpen mit einem elektrischen Antriebsmotor aufweisen.

Es ist allgemein bekannt, für die Bereitstellung von Dampf als Antriebsmedium für Dampfturbinen Speisewasser in einem Dampferzeuger einzuspeisen, in welchem das Speisewasser verdampft und gegebenenfalls überhitzt wird und anschließend der betreffenden Dampfturbine zugeführt wird. Ferner ist bekannt, zur Einspeisung des Speisewassers Pumpen vorzusehen, die das Speisewasser aus einem Speisewasserbehälter oder vergleichbarem Speisewasserreservoirs fördern.

Bei einem Kraftwerksblock einer Kombianlage werden im Regelfall wenigstens zwei Abhitzekessel vorgesehen, welche entsprechend der vorbeschriebenen Weise mit Speisewasser versorgt werden. Dabei ist es üblich, die Abhitzekessel als sogenannte Zweidruck-Abhitzekessel auszuführen, d. h. mit auf unterschiedlichem Druckniveau befindlichen Rohrleitungssystemen, welche sich entsprechend im Abhitzekessel bezüglich der darin installierten Verdampfer und Überhitzer fortsetzen.

Die Speisewassereinspeisung bei einem solchen Zweidruck-Abhitzekessel erfolgt wie auch bei anderen Kraftwerksanlagen mit dreifacher Redundanz für jedes Drucksystem, d. h. mittels Einsatz von drei voneinander unabhängigen Pumpen. Dabei ist üblicherweise jede Pumpe auf 50 % der maximalen Föderleistung ausgelegt, so daß jeweils ein Pumpenaggregat in Reserve bereitsteht, falls ein anderes Aggregat ausfallen sollte.

Entsprechend der unterschiedlichen Druckstufen, nämlich Hochdruck mit ca. 120 bar und Niederdruck mit ca. 16 bar, sind als motorische Antriebe für die Hochdruckpumpen sogenannte Mittelspannungsmotoren vorgesehen, während die Niederdruckpumpen mit Niederspannungsmotoren angetrieben werden, welche einen vergleichsweise ungünstigeren Wirkungsgrad als die Mittelspannungsmotoren haben.

Ausgehend von diesem Stand der Technik ist es Aufgabe der Erfindung, eine einfacher gestaltete Anordnung zu schaffen, bei welcher die verfügbare Antriebsleistung für die Pumpen vorteilhafter ausgenutzt werden kann.

Diese Aufgabe wird erfindungsgemäß durch die Merkmale des Patentanspruchs 1 gelöst. Danach ist vorgesehen, daß jeweils eine Pumpe für das Hochdrucksystem und eine Pumpe für das Niederdrucksystem einen gemeinsamen Mittelspannungsmotor als Antrieb aufweisen. Mit anderen Worten es wird nur noch die Hälfte der bislang erforderlichen Antriebsmotoren benötigt. Im Hinblick auf die günstigere Leistungsausbeute ist dabei vorgesehen, daß die Antriebsmotoren generell als Mittelspannungsmotoren ausgebildet sind, was ohne weiteres und ohne Nachteil auch für die Niederdruckpumpen möglich ist.

Gemäß einer bevorzugten Ausführungsform der Erfindung ist ein einziger Speisewasserbehälter vorgesehen, an welchem die Speisewasserpumpenstränge jeweils über Speisewasserleitungen angeschlossen sind. Dementsprechend weist jede Speisewasserleitung vorteilhafterweise eine den Speisewasserpumpensträngen vorgeschaltete Regelstation auf, wobei jeweils in Strömungsrichtung nach der Regelstation jede der drei aus Redundanzgründen vorgesehenen Speisewasserleitungen in einen Hochdruck-Pumpenstrang und in einen Niederdruck-Pumpenstrang aufgeteilt ist.

Eine weitere vorteilhafte Ausgestaltung der Erfindung sieht vor, daß jeder Hochdruck-Pumpenstrang an einer Hochdruck-Sammelleitung und jeder Niederdruck-Pumpenstrang an einer Niederdruck-Sammelleitung anschließt, welche jeweils zum Abhitzekessel geführt sind.

Diese und weitere vorteilhafte Ausgestaltungen der Erfindung sind Gegenstand der Unteransprüche.

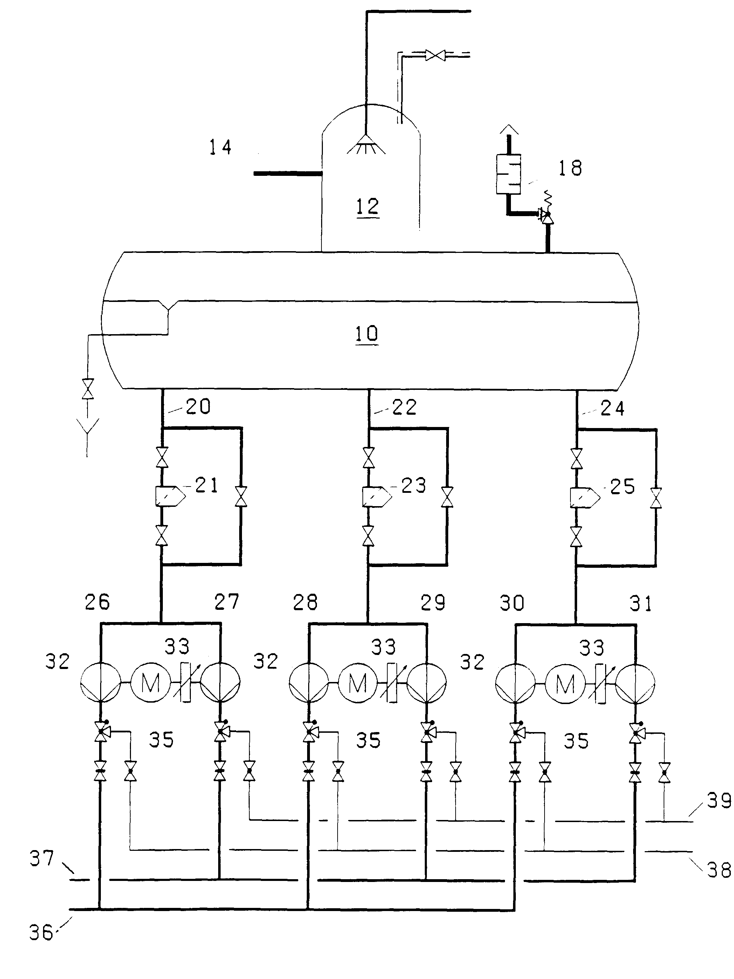

Anhand eines in der Zeichnung- dargestellten Ausführungsbeispiels sollen die Erfindung, vorteilhafte Ausgestaltungen, besondere Vorteile der Erfindung näher erläutert und beschrieben werden.

Es zeigt die einzige Figur einen Speisewasserbehälter 10 mit Entgaser 12 und Dampfvorwärmung 14 sowie mit einem Sprühanschluß 16 und einem Sicherheitsventil 18. Der Speisewasserbehälter 10 besitzt drei Speisewassersaugleitungsabgänge 20, 22, 24, an welche jeweils eine Filterstation 21, 23, 25 anschließt.

In Strömungsrichtung hinter der Filterstation 21, 23, 25 teilt sich die Speisewasserleitung 20, 22, 24 auf in je einen Hochdruck-Pumpenstrang 26, 28, 30 und in einen Niederdruck-Pumpenstrang 27, 29, 31. Jeder der Pumpenstränge 26 bis 31 ist mit einer der Druckstufe angepaßten Pumpe 32, 33 ausgestattet, welche jeweils mit einem Antriebsmotor 35 verbunden und von diesem beaufschlagt.

Druckseitig schließen die jeweiligen Hochdruck- und Niederdruck-Pumpenstränge 26 bis 31 an je eine der Druckstufe entsprechende Sammelleitung 36, 37 an, welche zu einem hier nicht näher dargestellten Abhitzekesseln geführt ist. An die druckseitigen Pumpenstränge 26 bis 31 schließen ferner ebenfalls druckstufenbezogen Sammelleitungen 38, 39 an, welche zur Kompensation der Null-Fördermenge dienen.

Der besondere Vorteil der in der einzigen Figur gezeigten Anordnung besteht darin, daß abgesehen von der Einsparung an Investitionsaufwand bezüglich des geringeren Bedarfs an Antriebsmotoren und der diesbezüglichen elektrischen Versorgung und Steuerung darüberhinaus auch geringere Betriebskosten resultieren aufgrund der Verwendung der vorteilhafteren Mittelspannungsmotoren zum Antrieb der Niederdruck- wie auch der Hochdruckpumpen.

## Patentansprüche

1. Schaltungsanordnung für die Speisewassereinspeisung in einen Dampferzeuger eines Kombikraftwerks mit einem Zweidruck-Abhitzekessel, der mit je einem Hochdruck- und Niederdrucksystem ausgestattet ist, wobei die Schaltungsanordnung wenigstens einen Speisewasserbehälte (10) und eine Speisewasserpumpenstrecke aufweist, mit denen das Hochdruck- und das Niederdrucksystem speisbar sind, welche Speisewasserpumpenstrecke von drei redundanten Speisewasserpumpensträngen (26-31) gebildet ist, die jeweils eine Niederdruckpumpe (33) mit einem zugeordneten elektrischen Motor als Antrieb und eine Hochdruckpumpe (32) mit einem elektrischen Motor als Antrieb aufweisen, wobei die Niederdruckpumpe und die Hochdruckpumpe eines jeden Speisewasserpumpenstrangs jeweils gemeinsam einen Mittelspannungsmotor (35) als Antrieb aufweisen.

2. Anordnung nach Anspruch 1, dadurch gekennzeichnet, daß ein einziger Speisewasserbehälter (10) vorgesehen ist, an welchem Speisewasserleitungen (20, 22, 24) angeschlossen sind, die mit den Speisewasserpumpensträngen (26 bis 31) in Reihe geschaltet sind.

3. Anordnung nach Anspruch 2, dadurch gekennzeichnet, daß jede Speisewasserleitung (20, 22, 24) eine den Speisewasserpumpensträngen (26 bis 31) vorgeschaltete Filterstation (21, 23, 25) aufweist.

4. Anordnung nach Anspruch 3, dadurch gekennzeichnet, daß in Strömungsrichtung nach der Filterstation (21, 23, 25) jede der Speisewasserleitungen (20, 22, 24) in einem Niederdruck-Pumpenstrang (26, 28, 30) und in einen Hochdruck-Pumpenstrang (27, 29, 31) aufgeteilt ist.

5. Anordnung nach Anspruch 4, dadurch gekennzeichnet, daß jeder Niederdruck-Pumpenstrang (26, 28, 30) an einer Niederdruck-Sammelleitung (36) und jeder Hochdruck-Pumpenstrang (27, 29, 31) an einer Hochdruck-Sammelleitung (37) anschließt, welche jeweils zu wenigstens einem Abhitzekessel geführt sind.

## Claims

1. Circuit arrangement for introducing the feed water into a steam generator of a combined-cycle power station having a two-pressure waste-heat boiler, which is equipped with a high-pressure and a low-pressure system, the circuit arrangement having at least one feed-water container (10) and a feed-water pump section, with which the high-pressure and the low-pressure system can be fed, which feed-water pump section is formed by three redundant feed-water pump lines (26-31) which each have a low-pressure pump (33) with an associated electric motor as the drive and a high-pressure pump (32) with an electric motor as the drive, the low-pressure pump and the high-pressure pump of each feed-water pump line in each case having a common medium-voltage motor (35) as the drive.

2. Arrangement according to Claim 1, characterized in that a single feed-water container (10) is provided, to which feed-water conduits (20, 22, 24) are connected, which conduits are connected in series with the feed-water pump lines (26 to 31).

3. Arrangement according to Claim 2, characterized in that each feed-water conduit (20, 22, 24) has a filter station (21, 23, 25) connected upstream of the feed-water pump lines (26 to 31).

4. Arrangement according to Claim 3, characterized in that each of the feed-water conduits (20, 22, 24) is divided into a low-pressure pump line (26, 28, 30) and a high-pressure pump line (27, 29, 31) after the filter station (21, 23, 25), viewed in the flow direction.

5. Arrangement according to Claim 4, characterized in that each low-pressure pump line (26, 28, 30) is connected to a low-pressure collecting conduit (36) and each high-pressure pump line (27, 29, 31) is connected to a high-pressure collecting conduit (37), which are respectively led to at least one waste-heat boiler.

## Revendications

1. Agencement de circuit pour l'alimentation en eau d'un générateur de vapeur dans une centrale combinée comportant une chaudière de récupération à deux étages de pression avec respectivement un circuit haute pression et un circuit basse pression, l'agencement de circuit comprenant au moins un réservoir d'eau alimentaire (10) et un circuit de pompage d'eau alimentaire à l'aide desquels les circuits haute et basse pression sont alimentés, le circuit de pompage d'eau alimentaire étant formé de trois branches de pompage (26 -31) redondantes qui comprennent chacun une pompe basse pression (33) avec un moteur électrique associé comme moyen d'entraînement et une pompe haute pression (32) avec un moteur électrique associé comme moyen d'entraînement, la pompe basse pression et la pompe haute pression de chaque branche de pompage présentant chaque fois un moteur commun (35) à moyenne tension comme moyen d'entraînement.

2. Agencement selon la revendication 1, caractérisé par le fait qu'il est prévu un réservoir (10) d'eau alimentaire unique auquel sont connectées des conduites d'eau alimentaire (20, 22, 24) qui sont branchées en série avec les branches de pompage (26 à 31).

3. Agencement selon la revendication 2, caractérisé par le fait que chaque conduite d'eau alimentaire (20, 22, 24) comporte un poste de filtrage (21, 23, 25) qui est placé en amont des branches de pompage (26 à 31).

4. Agencement selon la revendication 3, caractérisé par le fait que, en aval du poste de filtrage (21, 23, 25) vu dans la direction d'écoulement, chaque conduite d'eau alimentaire (20, 22, 24) est divisée en une branche de pompage basse pression (26, 28, 30) et une branche de pompage (27, 29, 31) haute pression.

5. Agencement selon la revendication 4, caractérisé par le fait que chaque branche de pompage basse pression (26, 28, 30) est connectée à un collecteur basse pression (36) et chaque branche de pompage haute pression (27, 29, 31) est connectée à un collecteur haute pression (37) qui mènent chacun à au moins une chaudière de récupération.
